# EUROPÄISCHE PATENTSCHRIFT

(11) **EP 2 721 714 B1**
(45) Veröffentlichungstag und Bekanntmachung des Hinweises auf die Patenterteilung: **16.09.2015**
(21) Anmeldenummer: 12743946.1
(22) Anmeldetag: 23.07.2012
(51) Int. Cl.: H02J 7/00, H02M 3/337, H02M 3/338

(54) **TRANSFORMATOR-TEILSCHALTUNG**
TRANSFORMER SUB-CIRCUIT
CIRCUIT PARTIEL DE TRANSFORMATEUR

(30) Priorität: 27.07.2011 DE 102011079918
(43) Veröffentlichungstag der Anmeldung: 23.04.2014
(73) Patentinhaber: Siemens Aktiengesellschaft, 80333 München (DE)
(72) Erfinder: KOMMA, Thomas, 85521 Ottobrunn (DE)
(86) Internationale Anmeldenummer: PCT/EP2012/064397
(87) Internationale Veröffentlichungsnummer: WO 2013/014124

(56) Entgegenhaltungen:
- EP-A2- 1 919 070

## Beschreibung

Die Erfindung betrifft eine Transformator-Teilschaltung zur Verwendung zur Aufladung eines elektrisch betriebenen Fahrzeugs.

Um eine Verbreitung von elektrisch betriebenen Fahrzeugen wie Pkws zu ermöglichen, ist es notwendig, eine Infrastruktur mit Möglichkeiten zur Wiederaufladung der fahrzeugeigenen Akkus zur Verfügung zu stellen. Neben der Aufladung über Kabel- und Steckersysteme gibt es auch die Möglichkeit der drahtlosen Wiederaufladung durch induktive Kopplung. Hierzu werden spezielle Transformatoren verwendet, deren Primär- und Sekundärseite räumlich über größere Luftspalte im Bereich von 1 bis 30 cm getrennt sind.

Dabei wird als Primärseite diejenige Seite des Transformators angesehen, die unter dem Fahrzeug beispielsweise im Boden angeordnet ist. Die Sekundärseite ist Teil des Fahrzeugs und ist im Bereich des Fahrzeugbodens angeordnet. In Abhängigkeit von der Bodenfreiheit des Fahrzeugs und der Parkposition, d.h. der relativen Anordnung von Primär- und Sekundärseite, ergeben sich unterschiedliche Werte für die Transformatorstreuinduktivitäten und für die Hauptinduktivität. Im Vergleich mit herkömmlichen Trafos, deren Teile nicht auftrennbar sind, ergeben sich sehr hohe Werte für die Streuinduktivitäten und vergleichsweise kleine Werte für die Hauptinduktivität.

Die Wechselrichter für die Primärseite werden typischerweise mit IGBTs aufgebaut und genau in der Resonanzfrequenz betrieben. Beispielsweise ist aus der US 2004/0189251 eine Transformatorschaltung zur Ladung eines elektrischen Fahrzeugs bekannt, die eine Brückenschaltung mit mehreren IGBT- oder MOSFET-Schaltern und eine Induktivität umfasst sowie eine Steuerungseinrichtung, die die Brückenschaltung als Wechselrichter betreibt und eine Abschaltung der Halbleiterschalter im Stromnulldurchgang bewirkt. Eine Abschaltung der einzelnen Halbleiterschalter im Stromnulldurchgang führt zu möglichst geringen Schaltverlusten. Befindet sich der Schaltzeitpunkt nicht genau im Resonanzpunkt, so steigen die Verluste erheblich an.

Es ist Aufgabe der vorliegenden Erfindung, eine Transformator-Teilschaltung zur Verwendung für die Aufladung eines elektrisch betriebenen Fahrzeugs anzugeben, die sich durch einen vereinfachten Aufbau und verbesserte Eigenschaften bezüglich der Schaltverluste auszeichnet.

Diese Aufgabe wird durch eine Transformator-Teilschaltung mit den Merkmalen von Anspruch 1 gelöst. Die abhängigen Ansprüche betreffen vorteilhafte Ausgestaltungen der Transformator-Teilschaltung.

Die erfindungsgemäße Transformator-Teilschaltung ist geeignet zur Verwendung bei der Aufladung des Akkus eines elektrisch betriebenen Fahrzeugs. Dafür ist die Transformator-Teilschaltung beispielsweise im Bodenbereich einer zur Aufladung bestimmten Parkstelle angebracht und agiert als Primärseite eines Transformators, der sich ergibt, wenn ein elektrisch betriebenes Fahrzeug mit entsprechender Sekundärseite auf der Parkstelle stehen bleibt. Die Transformator-Teilschaltung weist eine Brückenschaltung mit wenigstens zwei Halbleiterschaltern, insbesondere vier Halbleiterschaltern, auf. Mit der Brückenschaltung verbunden ist eine Induktivität zur Verwendung als Primärseite des sich ergebenden Transformators. Schließlich umfasst die Transformator-Teilschaltung eine Steuerungseinrichtung für die Halbleiterschalter der Brückenschaltung. Die Steuerungseinrichtung ist ausgestaltet, die Brückenschaltung als Wechselrichter zu betreiben. Dabei wird erfindungsgemäß eine Abschaltung eines der Halbleiterschalter dann vorgenommen, wenn der Stromfluss durch den Halbleiterschalter einen festlegbaren von Null verschiedenen Schwellwert erreicht oder durchschreitet. Als Halbleiterschalter werden erfindungsgemäß MOSFETs verwendet. Bevorzugt beträgt die Schaltfrequenz mehr als 100 kHz. Mit anderen Worten ist die Steuerungseinrichtung ausgestaltet, eine Schaltung der Halbleiterschalter derart zu bewirken, dass ein Betrieb bei einer gegenüber der Resonanzfrequenz erhöhten Frequenz durchgeführt wird.

Der erfindungsgemäße Aufbau erlaubt einen Betrieb mit äußerst geringen Schaltverlusten, da der abzuschaltende Strom in die bei den MOSFETs immer vorhandenen parallelen Streukapazitäten kommutiert. Gleichzeitig ist es auch vorteilhaft möglich, eine Anpassung der Betriebsfrequenz vorzunehmen, um solche Änderungen der elektrischen Eigenschaften auszugleichen, die sich durch die verschiedenen Parkpositionen von elektrisch betriebenen Fahrzeugen über der Transformatorteilschaltung ergeben. Es wird dadurch vorteilhaft erreicht, dass auch bei nicht optimaler Parkposition eines Fahrzeugs eine möglichst verlustarme Aufladung stattfinden kann.

Die Halbleiterschalter schalten zur Erreichung des überresonanten Betriebs aktiv einen von Null verschiedenen Strom ab. Der dabei abgeschaltete Strom beträgt bevorzugt zwischen 2 A und 10 A. Der genaue Schaltzeitpunkt wird in einer bevorzugten Ausgestaltung anhand einer Strommessung ermittelt.

Zweckmäßig wird nach der Abschaltung eines der Halbleiterschalter ein weiterer der Halbleiterschalter nach Verstreichen einer Totzeit von beispielsweise 100 ns bis 200 ns eingeschaltet. In dieser Zeit werden die Streukapazitäten umgeladen. Ein Stromfluss durch den weiteren Halbleiterschalter passiert dabei zunächst durch die parallelen parasitären Bodydioden erst nach dem nächstfolgenden Stromnulldurchgang. Es ist daher vorteilhaft nicht nötig, den Nulldurchgang für das Anschalten genau zu erfassen.

Gemäß einer Ausgestaltung handelt es sich bei den Halbleiterschaltern um einzelne MOSFETs. In einer alternativen Ausgestaltung wird an der Stelle der vier Halbleiterschalter im Wechselrichter jeweils eine Parallelschaltung mehrerer einzelner MOSFETs verwendet.

Ein bevorzugtes, jedoch keinesfalls einschränkendes Ausführungsbeispiel für die Erfindung wird nunmehr anhand der Figuren näher erläutert. Dabei sind die Merkmale schematisiert dargestellt. Es zeigen
- Figur 1: eine stationäre Ladeschaltung zusammen mit einer fahrzeugseitigen Ladeschaltung,
- Figur 2: den Frequenzgang der stationären Ladeschaltung und
- Figur 3: einen Verlauf von Drainstrom und Drain-Source-Spannung.

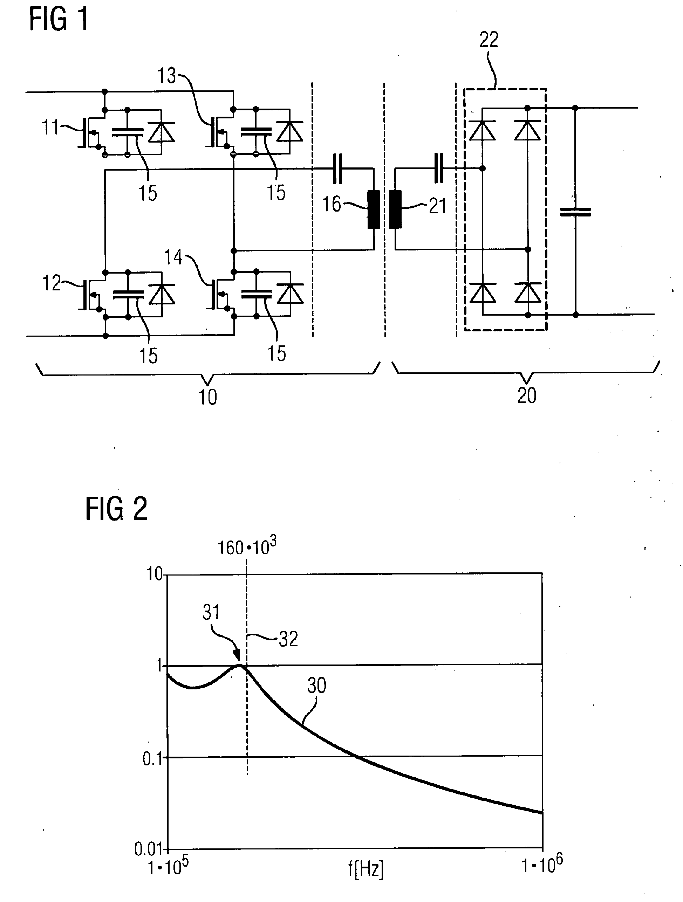

Figur 1 zeigt eine stationäre Ladeschaltung 10 zusammen mit einer fahrzeugseitigen Ladeschaltung 20. Die fahrzeugseitige Ladeschaltung 20 weist eine fahrzeugseitige Spule 21 auf, die als Teil eines Transformators agiert. Die fahrzeugseitige Spule 21 ist in diesem Ausführungsbeispiel mit einem Diolengleichrichter 22 verbunden, dessen Ausgänge mit der weiteren Leistungselektronik des Fahrzeugs, die nicht gezeigt ist, verbunden sind.

Die stationäre Ladeschaltung 10 weist eine stationärseitige Spule 16 auf, die induktiv mit der fahrzeugseitigen Spule 21 koppelt. In der realen Umgebung ist die stationäre Ladeschaltung beispielsweise im Boden im Bereich eines Parkplatzes untergebracht, wobei der Parkplatz zur drahtlosen Aufladung vorn elektrisch betriebenen Fahrzeugen gedacht ist. Die fahrzeugseitige Spule 21 wiederum ist zusammen mit dem Brückengleichrichter Teil eines elektrisch betriebenen Fahrzeugs. Das elektrisch betriebene Fahrzeug wird zum Aufladen auf dem Parkplatz positioniert. Die sich ergebende relative Anordnung der fahrzeugseitigen Spule 21 und der fahrzeugseitigen Spule 16 ist dabei variabel und ergibt sich durch die Fahrzeugposition. Die variable Positionierung bewirkt wiederum eine deutliche Variabilität der elektrischen Eigenschaften des sich ergebenden Transformators aus der fahrzeugseitigen Spule 21 und der stationärseitigen Spule 16.

Die stationäre Ladeschaltung 10 weist neben der stationärseitigen Spule 16 noch einen damit verbundenen Wechselrichter, bestehend aus einem ersten bis vierten MOSFET 11...14, auf. Jeder des MOSFETs 11...14 hat eine gewisse Streukapazität, die durch je einen Kondensator 15 in Parallelschaltung dargestellt ist. Die MOSFETs 11...14 sind dabei in zwei Paare aufgeteilt, wobei die MOSFETs 11...14 eines Paars seriell geschaltet sind und die beiden Paare parallel zueinander geschaltet sind. Die stationärseitige Spule 16 ist dabei mit einem Ausgang mit der Mitte eines der Paare und mit dem anderen Ausgang mit der Mitte des anderen Paares verbunden. An den jeweils verbundenen Außenseiten der beiden Paare liegt eine DC-Eingangsspannung an.

In einer alternativen Ausgestaltung, die in Figur 1 nicht gezeigt ist, werden nur zwei MOSFETs 11...14 verwendet. Dabei sind die zwei MOSFETs 13, 14 einer der beiden Brückenhälften, beispielsweise der rechten Brückenhälfte, durch Kondensatoren ersetzt, die einen Hilfszwischenkreis bilden.

Der gesamte Aufbau der stationären Ladeschaltung 10 weist einen Frequenzgang 30 auf, der in Figur 2 skizziert ist. Die Frequenzskala in Figur 2 reicht dabei von 100 kHz bis 1 MHz. Der Frequenzgang 30 weist ein deutliches Maximum bei einer Frequenz von in diesem Beispiel 156 kHz auf. Dieses Maximum wird als Resonanzfrequenz bezeichnet.

Eine in Figur 1 nicht dargestellte Steuereinrichtung für die stationäre Ladeschaltung 10 steuert die MOSFETs 11...14 nun im Ladebetrieb so, dass ein leicht überresonanter Betrieb vorgenommen wird. Dabei schalten die MOSFETs 11...14 einen von Null verschiedenen Strom aktiv ab. Im vorliegenden Ausführungsbeispiel wird die stationäre Ladeschaltung 10 so angesteuert, dass sich eine Arbeitsfrequenz 32 von 160 kHz, d.h. 4 kHz mehr als die Resonanzfrequenz, ergibt.

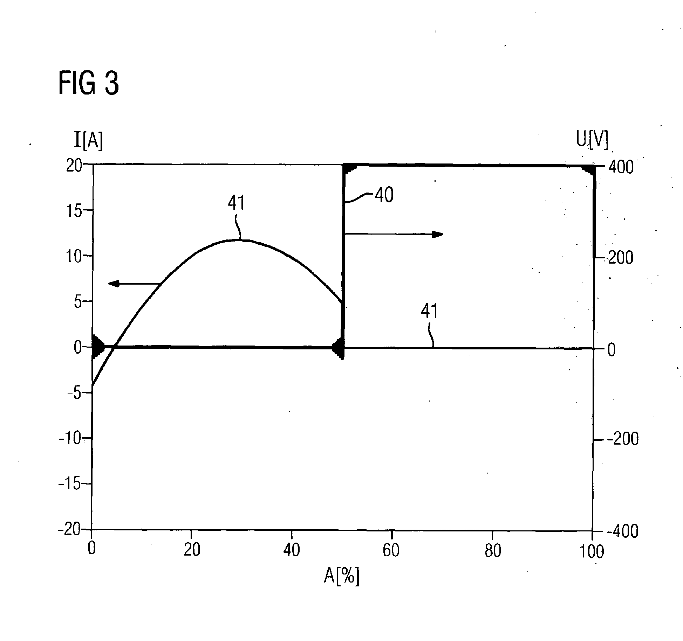

Einen konkreten Schaltvorgang dazu zeigt Figur 3. In der Figur 3 ist der Verlauf des Drainstroms 41 sowie der Verlauf der Drain-Source-Spannung 40 eines MOSFETs gezeigt. Die x-Achse des Graphen von Figur 3 zeigt dabei eine volle Periodendauer entsprechend der Arbeitsfrequenz 32. Es ist erkennbar, dass das Abschalten des entsprechenden MOSFETs 11...14 bei etwas unter 50 % der Periodendauer bei einem deutlich von Null verschiedenen Drainstrom 41 erfolgt. Dafür schaltet jeder der MOSFETs 11...14 einen Drainstrom 41 von ca. 5 A ab. Das Einschalten der jeweiligen MOSFETs 11...14 erfolgt natürlich derart, dass sich die Funktion eines Wechselrichters ergibt und erfolgt spannungslos nach Verstreichen einer Totzeit von ca. 100 bis 200 ns. Der abzuschaltende Strom kommutiert in die immer vorhandenen Kapazitäten und Bodydioden der MOSFETs 11...14 und fließt nach Überschreiten der 0 A, beispielsweise in Fig. 3 bei ca. 5 % der Periodendauer, selbsttätig durch den eingeschalteten MOSFET 11...14.

Der leicht überresonante Betrieb wird dabei auch beibehalten, wenn sich die Resonanzfrequenz aufgrund einer veränderten Positionierung der stationärseitigen Spule 16 zur fahrzeugseitigen Spule 21 verändert. Mit anderen Worten ist eine breitbandige Anpassung der Arbeitsfrequenz 32 an die jeweilige relative Positionierung realisiert. Vorteilhaft muss dadurch der Nulldurchgang des Drainstroms 41 nicht mehr exakt erfasst werden, da die An- und Abschaltung ohnehin nicht mehr beim Nulldurchgang erfolgt. Die Kondensatoren 15 werden vom jeweiligen Reststrom umgeladen und tragen so zur Vermeidung von Schaltverlusten bei.

Dadurch, dass bei der stationären Ladeschaltung 10 MOSFETs 11...14 an der Stelle von beispielsweise IGBTs verwendet werden, sind neben der Möglichkeit hoher Schaltfrequenzen von mindestens 100 kHz auch keine großen Totzeiten notwendig zur Ladungsträgerrekombination. Die stationäre Ladeschaltung 10 erlaubt die Kompensation von großen Luftspaltunterschieden und lateralen Verschiebungen der fahrzeugseitigen Spule 21 zur stationärseitigen Spule 16.

## Patentansprüche

1. Transformator-Teilschaltung (10) zur Verwendung zur Aufladung eines elektrisch betriebenen Fahrzeugs mit
- einer stationärseitigen Brückenschaltung mit wenigstens zwei Halbleiterschaltern (11...14), wobei die Halbleiterschalter (11...14) MOSFETs (11...14) sind,
- einer mit der Brückenschaltung verbundenen stationärseitigen Induktivität (16) zur Verwendung als Primärseite eines Transformators,
- einer Steuerungseinrichtung für die Halbleiterschalter (11...14) der Brückenschaltung, ausgestaltet, die Brückenschaltung als Wechselrichter zu betreiben, und dabei eine Abschaltung eines der Halbleiterschalter (11...14) dann vorzunehmen, wenn der Stromfluss durch den Halbleiterschalter einen festlegbaren von Null verschiedenen Schwellwert erreicht.

2. Transformator-Teilschaltung (10) gemäß Anspruch 1, bei der die Steuerungseinrichtung ausgestaltet ist, eine Schaltfrequenz (32) zu verwenden, die höher als die Resonanzfrequenz (31) ist.

3. Transformator-Teilschaltung (10) gemäß Anspruch 1 oder 2, ausgestaltet zur Ermittlung einer Größe, die ein Maß für den Strom in der Teilschaltung in Verbindung mit der Induktivität (16) repräsentiert.

4. Transformator-Teilschaltung (10) gemäß einem der vorangehenden Ansprüche, derart ausgestaltet, dass die Abschaltung bei einem Stromfluss zwischen 2 A und 10 A passiert.

5. Transformator-Teilschaltung (10) gemäß einem der vorangehenden Ansprüche, wobei die Steuerungseinrichtung ausgestaltet ist, nach Abschaltung eines der Halbleiterschalter (11...14) nach Ablauf einer Zeit von insbesondere zwischen 100 ns und 200 ns wenigstens einen weiteren der Halbleiterschalter (11...14) einzuschalten.

6. Transformator-Teilschaltung (10) gemäß einem der vorangehenden Ansprüche, wobei die Steuerungseinrichtung ausgestaltet ist, die Halbleiterschalter (11...14) mit einer Frequenz von mehr als 100 kHz zu schalten.

## Claims

1. Transformer sub-circuit (10) to be used for charging an electrically operated vehicle with
- a stationary-side bridge circuit with at least two semiconductor switches (11...14), wherein the semiconductor switches (11...14) are MOSFETs (11...14),
- a stationary-side inductance (16) connected to the bridge circuit, to be used as the primary side of a transformer,
- a control device for the semiconductor switches (11...14) of the bridge circuit, embodied to operate the bridge circuit as an inverter, and in doing so to undertake the switching off of one of the semiconductor switches (11...14) when the current flow through the semiconductor switch reaches a definable threshold value differing from zero.

2. Transformer sub-circuit (10) according to claim 1, in which the control device is embodied to use a switching frequency (32) which is higher than the resonance frequency (31).

3. Transformer sub-circuit (10) according to claim 1 or 2, embodied for determining a variable which represents a measure of the current in the sub-circuit in conjunction with the inductance (16).

4. Transformer sub-circuit (10) according to one of the preceding claims, embodied such that the switch-off takes place at a current flow of between 2 A and 10 A.

5. Transformer sub-circuit (10) according to one of the preceding claims, wherein the control device is embodied, after one of the semiconductor switches (11...14) is switched off, to switch on at least one other of the semiconductor switches (11...14) after a period of especially between 100 ns and 200 ns has elapsed.

6. Transformer sub-circuit (10) according to one of the preceding claims, wherein the control device is embodied to switch the semiconductor switches (11...14) with a frequency of more than 100 kHz.

## Revendications

1. Circuit (10) partiel de transformateur à utiliser pour charger un véhicule électrique comprenant
- un circuit en pont du côté fixe, ayant au moins deux commutateurs (11...14) à semi-conducteurs, les commutateurs (11...14) à semi-conducteurs étant des MOSFETs (11...14),
- une inductance (16) du côté fixe, reliée au circuit en pont, à utiliser comme côté primaire d'un transformateur,
- un dispositif de commande des commutateurs (11...14) à semi-conducteurs du circuit en pont, conformé pour faire fonctionner le circuit en pont en onduleur et effectuer ainsi une déconnexion de l'un des commutateurs (11...14) à semiconducteur lorsque le flux de courant dans le commutateur à semi-conducteurs atteint une valeur de seuil différente de zéro qui peut être fixée.

2. Circuit (10) partiel de transformateur suivant la revendication 1, dans lequel le dispositif de commande est conformé pour utiliser une fréquence (32) de commutation, qui est plus haute que la fréquence (31) de résonance.

3. Circuit (10) partiel de transformateur suivant la revendication 1 ou 2, conformé pour la détermination d'une grandeur qui représente en liaison avec l'inductance (16) une mesure du courant dans le circuit partiel.

4. Circuit (10) partiel de transformateur suivant l'une des revendications précédentes, conformé de manière à ce que l'interruption ait lieu à un flux de courant compris en 2 A et 10 A.

5. Circuit (10) partiel de transformateur suivant l'une des revendications précédentes, dans lequel un dispositif de commande est conformé pour, après la déconnexion d'un commutateur (11...14) à semi-conducteurs, connecter après l'expiration d'un temps, notamment compris entre 100 ns et 200 ns, au moins un autre des commutateurs (11...14) à semi-conducteurs.

6. Circuit (10) partiel de transformateur suivant l'une des revendications précédentes, dans lequel le dispositif de commande est conformé pour connecter les commutateurs (11...14) à semi-conducteurs à une fréquence de plus de 100 kHz.
